Europäisches Patentamt

European Patent Office

Office européen des brevets

(11) Veröffentlichungsnummer: **0 092 039**
**A1**

(12) **EUROPÄISCHE PATENTANMELDUNG**

(21) Anmeldenummer: **83101663.9**

(22) Anmeldetag: **21.02.83**

(51) Int. Cl.³: **G 03 B 27/54**

(30) Priorität: **20.04.82 DE 3214450**
**03.07.82 DE 3224900**

(43) Veröffentlichungstag der Anmeldung: **26.10.83**
**Patentblatt 83/43**

(84) Benannte Vertragsstaaten: **CH DE FR GB IT LI NL**

(71) Anmelder: **Develop Dr. Eisbein GmbH & Co.,**
**Dieselstrasse 8, D-7016 Gerlingen 1 (DE)**

(72) Erfinder: **Moser, Kurt, Obere Ringstrasse 31,**
**D-7016 Gerlingen (DE)**
Erfinder: **Moser, Karl, Wassbergstrasse 29,**
**CH-8127 Forch (CH)**
Erfinder: **Eisbein, Jürgen, Dr., Reifle Strasse 26,**
**D-7016 Gerlingen (DE)**

(74) Vertreter: **Wilhelm, Hans-Herbert, Dr.-Ing. et al,**
**Patentanwälte Dr.-Ing. Hans-Herbert Wilhelm Dipl.-Ing.**
**Hanjörg Dauster Gymnasiumstrasse 31B,**
**D-7000 Stuttgart 1 (DE)**

(54) **Belichtungseinrichtung für ein Kopiergerät.**

(57) Die Erfindung betrifft eine Belichtungseinrichtung mit einer Lampe, einem Reflektor und mit einem Glasfaserobjektiv für ein Kopiergerät. Um die Belichtungseinrichtung zu warten und insbesondere das Glasfaserobjektiv und den Reflektor zu reinigen, sind das Glasfaserobjektiv und der Reflektor mittels Verbindungsteilen zu einer aus dem Kopiergerätegehäuse herausschwenkbaren Baueinheit ausgebildet, die herausgeschwenkt werden kann, nachdem die zugehörige Lampe, die unabhängig davon in dem Gerätegehäuse befestigt ist, demontiert worden ist.

Belichtungseinrichtung für ein Kopiergerät.

Die Erfindung betrifft eine Belichtungseinrichtung mit einer stabförmigen Lampe, einem Reflektor, in welchem die Lampe angeordnet ist, und mit einem Glasfaserobjektiv, die innerhalb eines Gerätegehäuses eines Kopiergerätes angeordnet sind.

Um die Funktionssicherheit eines Kopiergerätes zu gewährleisten, ist es erforderlich, daß der Reflektor und insbesondere das Glasfaserobjektiv exakt einjustiert in dem Kopiergerät angeordnet sind, damit eine einwandfreie, unverzerrte Abbildung der zu kopierenden Vorlage erhalten wird. Darüber hinaus reagiert das Glasfaserobjektiv sehr empfindlich gegen Verschmutzungen, so daß es notwendig ist, dieses Glasfaserobjektiv bei einem Wartungsvorgang von Zeit zu Zeit zu reinigen.

Der Erfindung liegt die Aufgabe zugrunde, eine Belichtungseinrichtung der eingangs genannten Art so auszubilden, daß insbesondere das Glasfaserobjektiv bei einem Wartungsvorgang für eine Inspektion und Reinigung gut zugänglich wird, ohne daß die Gefahr besteht, daß die exakte Positionierung und Einjustierung verloren geht. Diese Aufgabe wird dadurch gelöst, daß der Reflektor und das Glasfaserobjektiv mit Hilfe von Verbindungsteilen zu einer aus dem Gerätegehäuse herausbewegbaren Baueinheit ausgebildet sind.

Um eine Belichtungseinrichtung der eingangs genannten Art zu schaffen, bei welcher das Glasfaserobjektiv innerhalb des Gerätegehäuses einfach und dennoch exakt justiert werden kann, wird in weiterer besonders vorteilhafter Ausgestaltung der Erfindung vorgesehen, daß die Baueinheit quer zur Schwenkachse verformungsweich gestaltet und im Bereich des eine in sich steife Einheit bildenden Glasfaserobjektivs mit zwei seitlichen Justierschrauben auf Anschlägen des Gerätegehäuses abgestützt ist, gegen die sie mittels Federkraft angedrückt ist. Aufgrund der Verformungsweichheit und des Andrückens mittels Federkraft lassen sich die beiden Justierschrauben unterschiedlich einstellen, so daß das Glasfaserobjektiv sich nach dem Einbau der Baueinheit exakt zu der Einrichtung ausrichten läßt, auf die das Bild übertragen wird. Das Einhalten von sehr engen Toleranzen bei der Ausbildung der Baueinheit und der Montage der Schwenkachse ist nicht erforderlich.

Um eine verformungsweiche Gestaltung zu ermöglichen, ist in zweckmäßiger Ausgestaltung der Erfindung vorgesehen, daß der Reflektor und eine Einfassung des Glasfaserobjektivs mit Stiften oder stiftförmigen Ansätzen in Aufnahmen von seitlichen Verbindungsteilen eingesetzt sind, die auf der Schwenkachse gelagert sind. Durch Toleranzen zwischen den Stiften oder stiftförmigen Ansätzen und den Aufnahmen wird eine ausreichende Verformungsweichheit erhalten. Die gleiche Verformungsweichheit wird auch erhalten, wenn der Reflektor mit Stiften oder stiftförmigen Ansätzen in Aufnahmen der Verbindungsteile gehalten ist, jedoch die Einfassung mit Verbindungselementen aus gummielastischem Material an den seitlichen Verbindungsteilen befestigt ist.

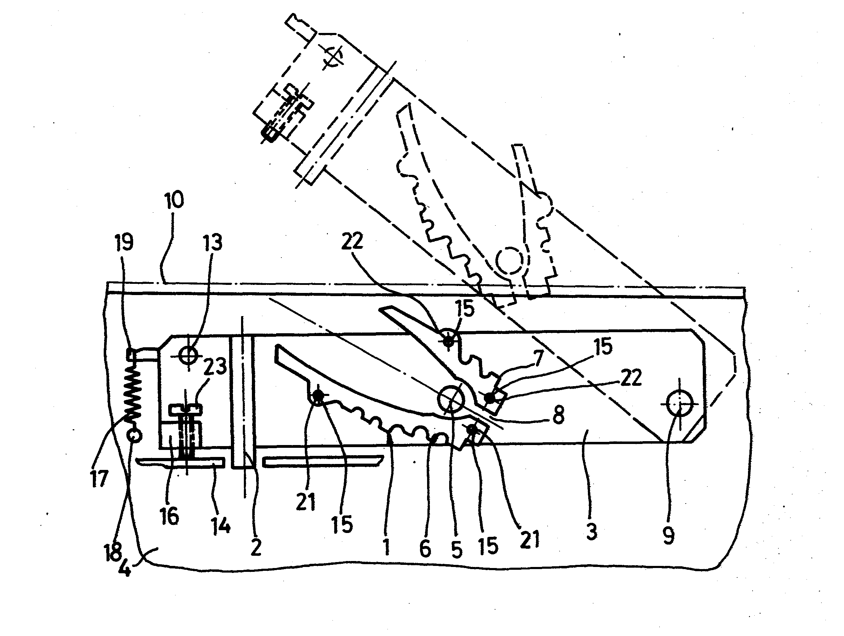

Weitere Merkmale und Vorteile der Erfindung ergeben sich aus der nachfolgenden Beschreibung einer in der Zeichnung dargestellten Ausführungsform.

Die Zeichnung zeigt einen schematisch dargestellten Ausschnitt eines Kopiergerätes mit einer erfindungsgemäßen Belichtungseinrichtung, bei welcher das Glasfaserobjektiv justierbar ist.

In der Zeichnung ist nur der obere Teil eines Kopiergerätegehäuses 4 in einem Ausschnitt dargestellt, auf dessen Oberseite ein hin- und herbeweglicher Belichterwagen angeordnet ist, von welchem mit einer strichpunktierten Linie eine Glasplatte 10 angedeutet ist, auf welche das zu kopierende Original mit der zu kopierenden Seite aufgelegt werden kann. Die Belichtungseinrichtung beleuchtet einen quer zur Verschieberichtung des Belichterwagens verlaufenden Streifen, der über ein Glasfaserobjektiv 2 auf einen nicht dargestellten Zwischenbildträger als Streifen übertragen wird, insbesondere auf eine Trommel mit einer Außenfläche aus fotoleitendem Halbleitermaterial.

Die Belichtungseinrichtung besitzt eine parallel zu dem zu belichtenden Streifen angeordnete, stabförmige Lampe 5, insbesondere eine Halogen-Lampe, deren Licht mittels eines Reflektors 1 streifenförmig auf dem zu belichtenden Original abgebildet wird. Der Reflektor 1 besteht aus zwei Teilen 6 und 7, die vorzugsweise aus Kunststoff hergestellt sind und deren Innenflächen mit einer Spiegelschicht durch Bedampfen o.dgl.versehen sind. Die Innenflächen der Teile 6 und 7 bilden zusammen eine im Querschnitt die Gestalt einer Teilellipse aufweisenden Reflektorfläche. Die Lampe 5 ist innerhalb des Reflektors 1 annähernd im Scheitelpunkt der Ellipse angeordnet. Auf der dem Lichtaustritt gegenüberliegenden Seite belassen die beiden Teile 6 und 7 zwischen sich einen Luftspalt 8 hinter der Lampe, so daß der Reflektor mit einer Kühlluftströmung durchströmt werden kann. Das Glasfaserobjektiv 2 besteht aus zwei jeweils auf Lücke versetzt angeordneten Reihen von parallel zueinander ausgerichteten Glasfaserstäbchen, die etwa einen Durchmesser von 2 mm haben. Die Glasfaserstäbchen sind chemisch behandelt, so daß sie als Linsen wirken, die einen Bildkreiswinkel von etwa 12° auf der Ein- und Ausgangsseite aufweisen. Sie sind vorzugsweise mit einer gummielastischen Fassung in einem Halter aus Blech oder Kunststoff angeordnet, von welchem in der Zeichnung die Kontur dargestellt ist.

Der Reflektor 1 und das Glasfaserobjektiv sind mit Hilfe von zwei seitlich angeordneten plattenförmigen Verbindungsteilen 3, die vorzugsweise Blechplatten sind, zu einer Baueinheit zusammengefaßt.

Die plattenförmigen Verbindungsteile 3 sind in Abstand zu dem Reflektor 1 auf der dem Glasfaserobjektiv 2 abgewandten Seite auf einer Schwenkachse 9 gelagert, so daß die Baueinheit aus Reflektor, Glasfaserobjektiv und den Verbindungsteilen oder Seitenteilen 3 verschwenkbar angeordnet ist. Da die Baueinheit dicht unterhalb der Oberseite des Gerätegehäuses 4 angeordnet ist, kann sie nach Wegschieben des Belichterwagens mit der angedeuteten Glasplatte 10 für einen Wartungsvorgang in die gestrichelt dargestellte Stellung nach oben herausgeschwenkt werden. Danach sind sowohl der Reflektor 1 als auch das Glasfaserobjektiv 2 für eine Inspektion und eine Reinigung leicht zugänglich. Der Reflektor 1 und das Glasfaserobjektiv 2 können beispielsweise durch eine besondere Lehre exakt zueinander justiert in der Baueinheit montiert werden. Die Baueinheit ist dabei so gestaltet, daß das Glasfaserobjektiv 2 zu der zu belichtenden Einrichtung, insbesondere einer als Zwischenbildträger dienenden Trommel ausgerichtet werden kann, ohne daß die Ausrichtung zwischen Reflektor 1 und dem Glasfaserobjektiv 2 verlorengeht.

Um die Justierung des Glasfaserobjektivs zu ermöglichen, ist die Baueinheit relativ verformungsweich oder verwindungsweich bezüglich der Schwenkachse 9 ausgebildet. Die beiden Teile 6 und 7 des Reflektors werden mit jeweils zwei Stiften 21 und 22 in den seitlichen Verbindungsteilen gehalten, die in Aufnahmebohrungen 15 der Verbindungsteile 3 eingreifen. Aufgrund von Toleranzen ergibt sich ein gewisses Spiel, so daß die Verbindungsteile 3 relativ zueinander um die Schwenkachse 9 leicht verschwenkt werden können. In entsprechender Weise ist die Einfassung des Glasfaserobjektivs mit Stiften oder stiftförmigen Ansätzen an den Seitenteilen 3 befestigt. Es ist auch möglich, gummielastische Verbindungselemente zwischen den Seitenteilen und der Einfassung des Glasfaserobjektivs 2 vorzusehen und gegebenenfalls auch zwischen den Teilen 6 und 7 des Reflektors 1 und den Verbindungsteilen 3.

Die seitlichen Verbindungsteile 3 sind an dem der Schwenkachse 9 abgewandten Ende im Bereich des Glasfaserobjektivs mit Gewindeansätzen 16 versehen, in die jeweils eine Justierschraube 23 eingeschraubt ist, die sich auf einem Anschlag 14 des Gerätegehäuses 4 abstützt, beispielsweise auf einer Wand des Gehäuserahmens. Außerdem sind an einer Verbindungsstange 13 zwischen den beiden Verbindungsteilen 3 Anhängeösen 19 angebracht, in die vorzugsweise zwei Federn 17 eingehängt sind, deren anderes Ende an gehäusefeste Bolzen 18 angreift. Die Federn 17 drücken somit die Justierschrauben 23 gegen die Anschläge. Durch Verstellen der Justierschrauben 23 läßt sich das Glasfaserobjektiv 2, das aufgrund seiner Einfassung eine in sich steife Einheit bildet, einstellen, wobei es aufgrund der Verformungsweichheit der Baueinheit auch um eine quer zur Schwenkachse 9 verlaufende gedachte Achse gekippt werden kann, so daß das Glasfaserobjektiv exakt parallel zu der Achse einer als Zwischenbildträger dienenden Trommel eingestellt werden kann. Vor einem Herausschwenken der Baueinheit werden die Federn 17 von den Bolzen 18 oder den Einhängeösen 19 gelöst.

Die Lampe 5 ist in nicht näher dargestellter Weise mit elektrischen Anschlüssen versehen. Um keine beweglichen elektrischen Leitungen vorsehen zu müssen, ist die Lampe 5 in nicht näher dargestellter Weise unabhängig von der Baueinheit an dem Gerätegehäuse 4 befestigt. Diese Befestigung erfolgt durch an dem Gerätegehäuse angebrachte Kontaktzungen, die jeweils die stirnseitigen Enden der Lampe 5 aufnehmen, die als entsprechende Kontakte ausgebildet sind. Das Gerätegehäuse 4 und die Verbindungsteile 3 sind im Bereich der Lampe 5 derart mit Aussparungen versehen, daß nach Wegbewegen wenigstens einer Kontaktzunge die Lampe in ihrer Längsrichtung seitlich aus dem Gerätegehäuse herausgezogen werden kann, so daß danach die Baueinheit nach oben herausschwenkbar ist. Entsprechend wird die Lampe 5 erst wieder eingeführt, wenn die Baueinheit sich in ihrer Betriebsposition befindet.

Patentansprüche:

1. Belichtungseinrichtung mit einer stabförmigen Lampe, einem Reflektor, in welchem die Lampe angeordnet ist, und mit einem Glasfaserobjektiv, die innerhalb eines Gerätegehäuses eines Kopiergeräts angeordnet sind, dadurch gekennzeichnet, daß der Reflektor (1) und das Glasfaserobjektiv (2) mit Hilfe von Verbindungsteilen (3) zu einer aus dem Gerätegehäuse (4) herausbewegbaren Baueinheit ausgebildet sind.

2. Belichtungseinrichtung nach Anspruch 1, dadurch gekennzeichnet, daß die Lampe (5), die unabhängig von der Baueinheit an dem Gerätegehäuse (4) gehalten ist, von einer Seite her in die in dem Gerätegehäuse (4) angeordnete Baueinheit einführbar und aus dieser herausnehmbar ist.

3. Belichtungseinrichtung nach Anspruch 1 oder 2, dadurch gekennzeichnet, daß die Baueinheit, die dicht unterhalb der Oberseite des Gerätegehäuses (4) angeordnet ist, aus der Oberseite des Gerätegehäuses (4) herausschwenkbar gelagert ist.

4. Belichtungseinrichtung nach einem oder mehreren der Ansprüche 1 bis 3, dadurch gekennzeichnet, daß der Reflektor (1) aus zwei Teilen (6, 7) besteht, die mit ihren Stirnenden an den plattenförmigen Verbindungsteilen (3) angebracht sind.

5. Belichtungseinrichtung nach Anspruch 4, dadurch gekennzeichnet,

daß zwischen den beiden Teilen (6, 7) des Reflektors (1) auf der dem Lichtaustritt abgewandten Seite ein Luftspalt (8) belassen ist.

6. Belichtungseinrichtung nach einem oder mehreren der Ansprüche 1 bis 5,
dadurch gekennzeichnet,
daß an den plattenförmigen Verbindungsteilen (3) die Enden des Glasfaserobjektivs (2) befestigt sind.

7. Belichtungseinrichtung nach einem oder mehreren der Ansprüche 1 bis 6,
dadurch gekennzeichnet,
daß die beiden Verbindungsteile (3) auf einer parallel zu der Achse des Reflektors (1) verlaufenden Schwenkachse (9) gelagert sind.

8. Belichtungseinrichtung nach einem der Ansprüche 1 bis 7,
dadurch gekennzeichnet,
daß die Baueinheit quer zur Schwenkachse (9) verformungsweich gestaltet und im Bereich des eine in sich steife Einheit bildenden Glasfaserobjektivs (2) mit zwei seitlichen Justierschrauben (23) auf Anschlägen (14) des Gerätegehäuses (4) abgestützt ist, gegen die sie mittels Federkraft angedrückt ist.

9. Belichtungseinrichtung nach Anspruch 8,
dadurch gekennzeichnet,
daß der Reflektor (1) und eine Einfassung des Glasfaserobjektivs (2) mit Stiften oder stiftförmigen Ansätzen (21, 22) in Aufnahmen (15) von zwei seitlichen Verbindungsteilen (3) eingesetzt sind, die auf der Schwenkachse (9) gelagert sind.

10. Belichtungseinrichtung nach Anspruch 8 oder 9,

dadurch gekennzeichnet,

daß die seitlichen Verbindungsteile (3) mit Gewindeansätzen (16) zur Aufnahme der Justierschrauben (23)
versehen sind.

## EUROPÄISCHER RECHERCHENBERICHT

Nummer der Anmeldung

0092039

EP 83 10 1663

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 143 964 (Y. OGURA et al.)<br>* Figur 1; Spalte 1, Zeile 49 - Spalte 2, Zeile 2 *<br><br>--- | 1,4,5 | G 03 B 27/54 |
| A | US-A-4 154 500 (H. FUNATO et al.)<br>* Figur 5; Zusammenfassung *<br><br>----- | 1 | |

| | RECHERCHIERTE SACHGEBIETE (Int. Cl. ³) |
|---|---|
| | G 03 B 27/00 |

Der vorliegende Recherchenbericht wurde für alle Patentansprüche erstellt.

| Recherchenort<br>DEN HAAG | Abschlußdatum der Recherche<br>27-07-1983 | Prüfer<br>PRATSCH H.R. |
|---|---|---|